(19) **Europäisches Patentamt**
**European Patent Office**
**Office européen des brevets**

(11) **EP 0 628 935 B1**

(12) ## FASCICULE DE BREVET EUROPEEN

(45) Date de publication et mention de la délivrance du brevet:
**20.05.1998 Bulletin 1998/21**

(51) Int Cl.⁶: **G07F 7/10**

(21) Numéro de dépôt: **94401209.5**

(22) Date de dépôt: **02.06.1994**

(54) **Procédé d'authentification d'un objet portatif par un terminal hors ligne, objet portatif et terminal correspondants**

Verfahren zum Beglaubigen eines tragbaren Objektes mittels eines off-line Terminals, entsprechendes, tragbares Objekt und entsprechendes Terminal

Portable object authentication method by an off-line terminal, corresponding portable object and terminal

(84) Etats contractants désignés:
**AT BE CH DE DK ES FR GB GR IT LI LU NL SE**

(30) Priorité: **08.06.1993 FR 9306855**

(43) Date de publication de la demande:
**14.12.1994 Bulletin 1994/50**

(73) Titulaire: **BULL CP8**
**78430 Louveciennes (FR)**

(72) Inventeur: **Patarin, Jacques**
**F-78220 Viroflay (FR)**

(74) Mandataire: **Corlu, Bernard et al**
**68, route de Versailles,**
**PC/59C18**
**78430 Louveciennes (FR)**

(56) Documents cités:
**EP-A- 0 096 599        EP-A- 0 231 702**
**EP-A- 0 284 133**

- **IEEE COMMUNICATIONS MAGAZINE, vol.29, no.6, Juin 1991, PISCATAWAY,N.J.,US pages 42 - 48 HANS-PETER KÖNIGS 'CRYPTOGRAPHIC IDENTIFICATION METHODS FOR SMART CARDS IN THE PROCESS OF STANDARDIZATION'**

**Description**

L'invention concerne un procédé d'authentification par un terminal hors ligne d'un objet portatif, ainsi que l'objet portatif et le terminal permettant de mettre en oeuvre ce procédé.

On entend par terminal hors ligne un terminal qui est capable d'authentifier un objet portatif sans être relié à un organe central.

On sait que la délivrance de biens ou de services par des moyens informatiques connaît un développement toujours croissant. L'accès aux biens ou aux services fournis par un réseau est autorisé par des terminaux auxquels sont connectés des objets portatifs, généralement des cartes à mémoire délivrées par un organisme autorisé. Avant de donner l'accès aux biens ou aux services, il est nécessaire que chaque terminal puisse authentifier l'objet portatif qui lui est raccordé afin de rejeter tout objet portatif qui n'aurait pas été délivré par l'organisme autorisé.

Une procédure d'authentification connue consisterait à relier chaque terminal à un organe d'authentification central de façon à effectuer une authentification en ligne, l'organe d'authentification central étant alors protégé pour empêcher tout accès à des fraudeurs qui voudraient faire authentifier des objets non délivrés par l'organisme autorisé. Une telle procédure est toutefois très onéreuse en raison de l'importance du réseau de communication qui devrait en permanence fonctionner entre les terminaux et l'organe d'authentification central.

Afin de minimiser le coût de l'authentification, les terminaux sont souvent hors ligne et on a mis en place dans chaque terminal une procédure lui permettant de procéder à l'authentification.

Deux procédés d'authentification par un terminal hors ligne sont actuellement connus. Selon un premier procédé, le terminal contient un code secret et exploite un algorithme mettant en oeuvre ce code secret (IEEE COMMUNICATIONS MAGAZINE, vol. 29, no. 6, Juin 1991, PISCATAWAY, N.J., US, pages 42-48). Toutefois les terminaux sont destinés à être mis dans des lieux qu'il est difficile de protéger de façon absolue contre le piratage, et la découverte du code secret par un fraudeur lui donne la possibilité de fabriquer des objets portatifs qui seront authentifiés par les autres terminaux contenant le même code secret. Il est donc nécessaire de mettre en place des moyens onéreux pour la protection efficace du code secret.

Selon un second procédé connu, les terminaux hors ligne contiennent un code accessible mais il est alors nécessaire de mettre en place dans les objets portatifs un algorithme de chiffrement utilisant la multiplication modulaire, ce qui implique la mise en place sur l'objet portatif de circuits de traitement généralement trop coûteux (EP-A-0 231 702).

Un but de la présente invention est de proposer un procédé pouvant être mis en oeuvre par un terminal hors ligne ne contenant pas de secret, et sans qu'il soit nécessaire de faire effectuer des multiplications modulaires par le circuit de traitement de l'objet portatif.

En vue de la réalisation de ce but, on propose selon l'invention un procédé d'authentification selon la revendication 1.

Ainsi, il n'est pas possible pour un fraudeur qui aura eu accès au tableau de déterminer à partir des valeurs de contrôle les valeurs secondaires qui doivent être fournies par l'objet portatif pour que les transformées de ces valeurs secondaires par la fonction à sens unique soient identiques aux valeurs de contrôle du tableau.

L'invention concerne aussi un objet portatif et un terminal aptes à mettre en oeuvre le procédé précité.

L'objet portatif selon l'invention comporte une mémoire non accessible en lecture de l'extérieur et contenant un code d'authentification secret (K) et un circuit de traitement et est caractérisé en ce que celui-ci utilise un algorithme de chiffrement symétrique pour délivrer une valeur secondaire (Ri) qui est fonction du code secret (K) et d'une valeur primaire (Qi) transmise à l'objet par le terminal dans lequel l'objet est introduit.

Quant au terminal selon l'invention, il comporte une série de valeurs primaires (Qi) et une série de valeurs de contrôle (Ui), un dispositif apte à appliquer, à une valeur secondaire (Ri) reçue lors d'une procédure d'authentification d'un objet portatif connecté au terminal, une fonction à sens unique (f) et un comparateur du résultat obtenu et de la valeur de contrôle correspondante du tableau.

D'autres caractéristiques et avantages de l'invention apparaîtront à la lecture de la description qui suit de diverses versions du procédé selon l'invention en relation avec les figures ci-jointes parmi lesquelles :

- la figure 1 illustre de façon schématique une première version du procédé selon l'invention,

- la figure 2 illustre de façon schématique une version plus sophistiquée du procédé illustré à la figure 1,

- la figure 3 illustre de façon schématique un aspect avantageux de l'invention en relation avec une version du procédé selon l'invention identique à celle illustrée par la figure 1,

- la figure 4 illustre de façon schématique une variante de réalisation du procédé illustré par la figure 3.

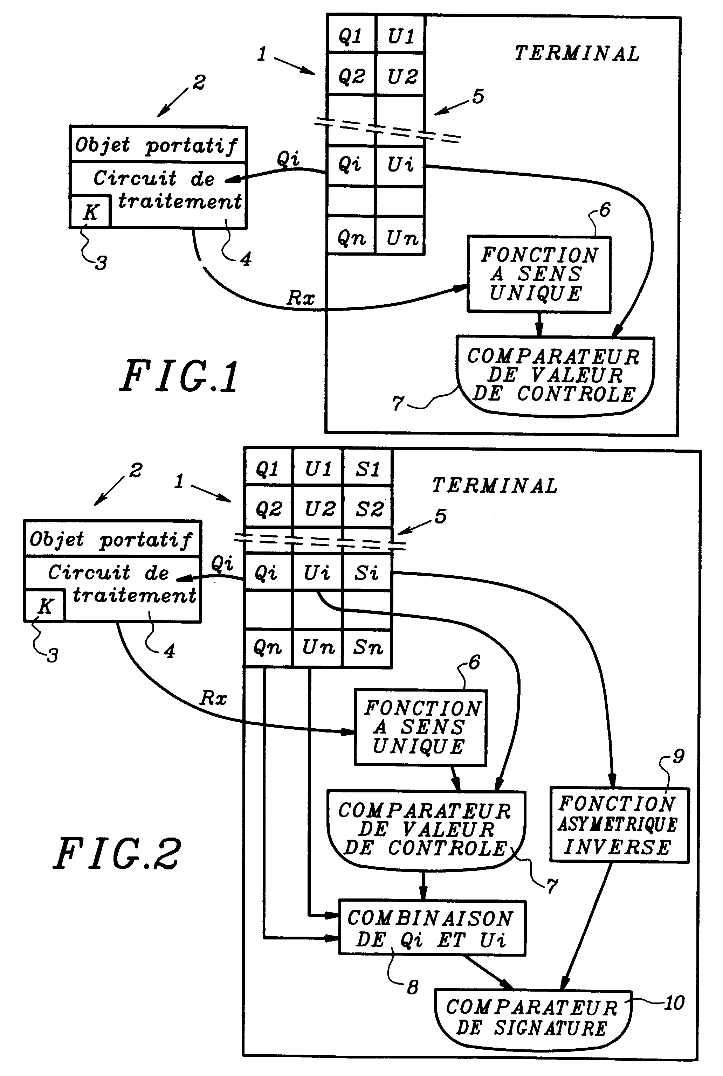

En relation avec la figure 1, le procédé selon l'invention est destiné à permettre l'authentification par un terminal hors ligne généralement désigné en 1 d'un objet portatif généralement désigné en 2 comportant une mémoire 3 non accessible en lecture de l'extérieur de l'objet portatif, et contenant un code d'authentification secret K, et un circuit de traitement 4 utilisant de façon connue en soi un algorithme de chiffrement symétrique, et plus généralement un algorithme d'embrouillement, pour délivrer une valeur secondaire Ri qui est fonction du code secret K et d'une valeur primaire Qi transmise par le terminal. Dans une première variante de réalisation de l'invention, le code secret K est le même pour tous les objets portatifs qui peuvent être connectés au terminal.

Dans la suite de l'exposé, la valeur primaire Qi sera désignée par le terme "question", tandis que la valeur secondaire Ri le sera par le terme "réponse".

A titre d'exemple non limitatif, l'algorithme de chiffrement symétrique est par exemple l'algorithme connu sous le nom de DATA ENCRYPTION STANDARD, en abrégé DES, de sorte que la réponse à une question Qi est donnée par la formule $Ri = DES_K(Qi)$.

Par ailleurs, on met en place dans le terminal 1 un tableau 5 comportant une série de questions Q1, Q2... Qi....Qn, et des valeurs de contrôle U1, U2.... Ui... Un, qui sont des transformées par une fonction à sens unique des réponses R1, R2...., Ri..., Rn calculées par le circuit de traitement d'un objet portatif authentique. On a donc Ui = f(Ri). La fonction à sens unique f est par exemple l'élévation au carré modulo m̲ où m̲ est un produit de deux grands nombres premiers non divulgués. Pour la question Qi on a donc la valeur de contrôle :

$$Ui = (Ri)^2 \text{ modulo } \underline{m}.$$

On rappelle à ce propos qu'une fonction à sens unique est une fonction qui peut être calculée dans un sens sans information particulière mais qui ne peut pas être calculée de façon inverse. Dans l'exemple décrit il est en effet possible de calculer $(Ri)^2$ modulo m dès l'instant où l'on connaît Ri mais il n'est pas possible de déterminer Ri en connaissant seulement Ui.

Dans le procédé selon l'invention, les valeurs de contrôle sont calculées par l'organisme autorisé en appliquant successivement la fonction à sens unique aux différentes réponses données par un objet portatif authentique aux différentes questions prévues pour être incluses dans le tableau puis l'ensemble des questions et des valeurs de contrôle est chargé dans le tableau du terminal. Chaque terminal peut avoir des questions Q1, ...., Qn qui lui sont propres.

Par ailleurs, le terminal 1 comporte un circuit de traitement 6 qui applique la même fonction à sens unique à la réponse Rx qui est donnée par un objet portatif à authentifier lorsqu'il est connecté au terminal et qu'une question Qi lui est transmise. Le terminal 1 comporte également un comparateur 7 qui compare la valeur de contrôle Ui qui correspond à la question Qi du tableau, avec la transformée par la fonction à sens unique de la réponse Rx qui est donnée par l'objet portatif en réponse à la question Qi qui lui est transmise.

Si l'objet portatif connecté est authentique, la réponse Rx est égale à Ri et sa transformée par la fonction à sens unique est donc égale à Ui. Le terminal donne alors accès aux opérations prévues en liaison avec l'objet portatif considéré. Si au contraire l'objet portatif n'est pas authentique, la réponse Rx est différente de Ri de sorte que la transformée par la fonction a sens unique est différente de la valeur de contrôle Ui et l'objet portatif est rejeté. On remarquera à ce propos que l'accès au tableau 5 peut être public et qu'il serait illusoire d'inclure dans le terminal un tableau contenant les réponses R1, R2...., Ri.... Rn car il serait alors aisé pour un fraudeur de fabriquer un objet portatif ne contenant ni le code K ni le circuit de traitement symétrique, mais tout simplement un tableau identique au tableau 5 de façon à transmettre la réponse Ri au terminal lors de la transmission par celui-ci d'une question Qi. On remarquera également qu'il n'est pas possible pour un fraudeur qui aura eu accès au tableau 5 de retrouver la valeur de la réponse Ri puisque la détermination d'une telle réponse supposerait qu'il soit possible d'inverser la fonction Ui = f (Ri). A ce propos on notera que la fonction à sens unique f peut être une fonction totalement à sens unique, c'est-à-dire qu'il n'existe réellement aucune fonction calculable qui soit l'inverse de la fonction f, ou, comme dans l'exemple décrit où f est une élévation au carré modulo m, une fonction qui pourrait être inversée si l'on connaissait certains paramètres mais qui ne peut pas l'être en pratique puisque ces paramètres ne sont pas inclus dans le terminal.

En raison du caractère accessible du terminal 1, la version la plus simple du procédé selon l'invention n'assure pas la sécurité recherchée vis-à-vis d'une personne qui serait capable non seulement de consulter le tableau 5 mais également de le modifier sans se faire remarquer. Il serait en effet possible pour une telle personne de réaliser d'une part un faux objet portatif comportant un algorithme quelconque transmettant des réponses aux questions transmises par le terminal, et de modifier d'autre part les valeurs de contrôle du tableau 5 du terminal pour que ces valeurs de contrôle soient le résultat de l'application de la fonction à sens unique aux réponses fournies par le faux objet portatif. Le résultat de la comparaison par le comparateur 7 sera en effet dans ce cas considéré comme satisfaisant et il serait donc donné accès aux opérations contrôlées par le terminal. Pour éviter une telle fraude, on prévoit une version plus sophistiquée du procédé selon l'invention qui est illustrée par la figure 2.

Dans cette seconde version de l'invention, le terminal contient un tableau 5 comportant non seulement comme précédemment une série de questions et une série de valeurs de contrôle, mais en outre une série de signatures S1, S2,... Si... Sn qui sont des transformées par une fonction de chiffrement asymétrique d'une combinaison de la question et de la valeur de contrôle correspondante. Une question Qi étant par exemple une succession de 64 bits et la valeur de contrôle correspondante Ui étant par exemple une suite de 128 bits, on réalisera par exemple une combinaison de la question et de la valeur de contrôle en accolant deux fois de suite la question et la valeur de contrôle selon la séquence QiUiQiUi, puis la fonction de chiffrement asymétrique est appliquée à cette combinaison par l'organisme autorisé pour déterminer la signature correspondante Si à inclure dans le tableau d'authentification 5. La fonction de chiffrement asymétrique est par exemple la racine carrée modulo m de la combinaison ainsi réalisée. Cette racine carrée modulo m ne peut être déterminée qu'en ayant la connaissance de paramètres qui ne sont en aucune façon inclus dans le terminal.

Lors de l'authentification d'une carte, on applique d'une part la procédure qui a été décrite à propos de la version simplifiée du procédé de l'invention puis, si la réponse est satisfaisante, on effectue dans le terminal la combinaison précitée QiUiQiUi au moyen d'un circuit de traitement 8 et, au moyen d'un circuit de traitement 9, on applique par ailleurs à la signature Si la fonction inverse de la fonction de chiffrement asymétrique qui a été utilisée par l'organisme autorisé pour déterminer la valeur de la signature Si, puis on compare dans un comparateur 10 la combinaison effectuée par le circuit de traitement 8 et la transformée de la signature Si par le circuit de traitement 9. On remarquera que cette fonction asymétrique inverse, c'est-à-dire l'élévation au carré modulo m dans l'exemple décrit, ne nécessite pas la connaissance des paramètres qui étaient nécessaires pour appliquer la fonction de chiffrement asymétrique directe. La réalisation de cette fonction inverse par le terminal, laquelle peut être appréhendée par un fraudeur, ne permet donc pas à celui-ci de déterminer la signature qu'il faut introduire en même temps qu'une valeur de contrôle pour que cette signature soit cohérente avec la valeur de contrôle. En particulier, si comme il avait été envisagé précédemment, le fraudeur réalise une fausse carte et falsifie les valeurs de contrôle correspondantes pour que la première comparaison soit satisfaite, il ne lui sera pas possible de déterminer les signatures qui doivent être associées aux valeurs de contrôle pour que la seconde comparaison soit également satisfaisante. La sécurité du procédé est donc améliorée par rapport à la version la plus simple de l'invention.

Il serait également possible pour un fraudeur avisé de ne pas modifier le tableau 5 du terminal mais d'obtenir à titre provisoire une carte authentique, de transmettre successivement toutes les questions du tableau et de relever au passage les réponses Ri transmises par l'objet portatif au terminal en amont de l'application de la fonction à sens unique. Etant muni de toutes les réponses, il est alors possible pour le fraudeur de réaliser un faux objet portatif contenant un tableau associant simplement les réponses Ri aux questions Qi et transmettant ainsi au terminal une réponse Ri chaque fois qu'une question Qi est émise par le terminal. Pour combattre cette fraude, deux solutions sont envisagées selon l'invention.

Selon une première solution qui peut être utilisée lorsque le tableau comprend un très grand nombre de questions par rapport au nombre d'objets portatifs qui sont susceptibles d'être connectés au terminal, on efface une ligne complète du tableau après que la question correspondante a été transmise une fois à un objet portatif. Le fraudeur qui interceptera les réponses aux questions ne pourra donc pas utiliser celles-ci puisqu'aucune question identique ne sera transmise à nouveau. On notera à ce propos que le terminal est de préférence régulièrement relié de façon ponctuelle à un organe central de l'organisme autorisé par une ligne de télétransmission afin de recharger ou de modifier le tableau 5. Si un terminal reçoit très fréquemment des demandes d'accès on peut prévoir un tableau 5 comportant plusieurs milliers de lignes.

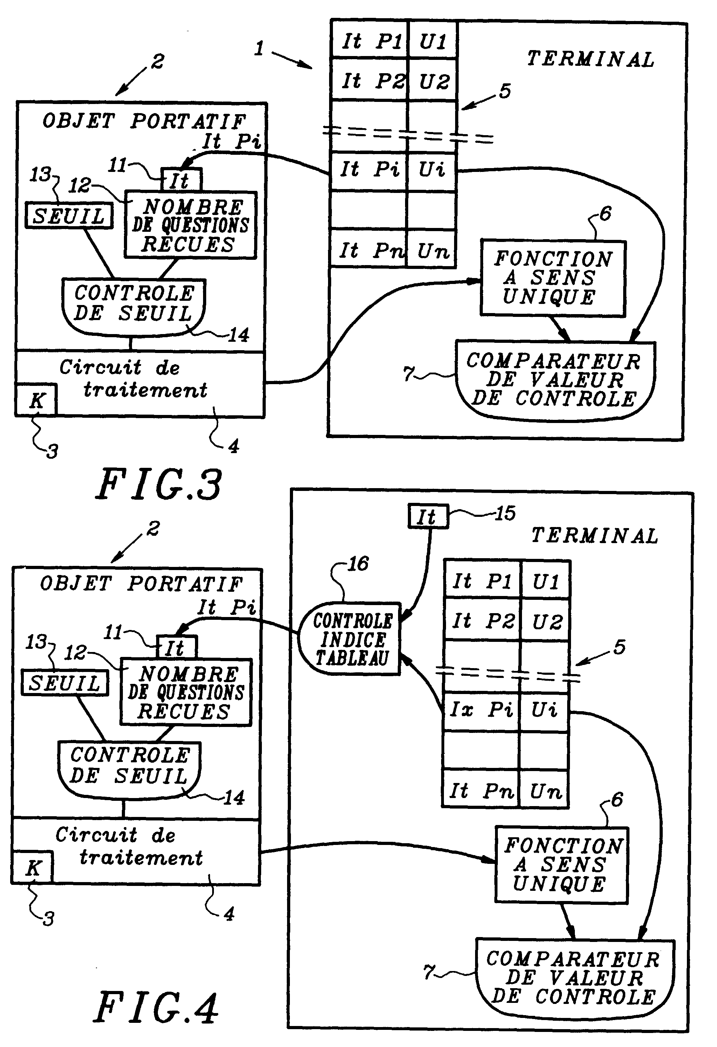

Selon une seconde solution qui est illustrée par la figure 3, on inclut à chaque question du tableau un indicatif It du tableau. Par exemple lorsque les questions sont constituées par une suite de 64 bits, on prévoit que les dix premiers bits de chaque question seront identiques et constitueront l'indicatif du tableau. Chaque question Qi est donc de la forme ItPi où seul Pi varie d'une question à une autre. Chaque terminal du réseau contient donc un tableau ayant un indicatif différent d'un autre terminal. Par ailleurs, on mémorise dans une mémoire 11 de l'objet portatif l'indicatif de chaque tableau ou des dix derniers tableaux ou des dix tableaux les plus fréquents dont une question lui a été transmise lors de sa connexion à un terminal, et on associe à chaque indicatif mémorisé un compteur 12 qui est incrémenté chaque fois qu'une question contenant l'indicatif mémorisé est transmise à l'objet portatif. Par ailleurs un seuil est mémorisé dans une mémoire 13 de l'objet portatif et la valeur du compteur 12 est comparée au seuil par un comparateur 14 chaque fois qu'une question est transmise au circuit de traitement 4. Lorsque le compteur atteint le seuil mémorisé, le circuit de traitement 4 de l'objet portatif est bloqué de sorte que l'objet portatif ne répond plus aux questions du terminal correspondant. On interdit ainsi à un fraudeur d'obtenir les réponses à toutes les questions du tableau et, compte tenu du caractère aléatoire des questions transmises par le terminal, on minimise le risque de faire authentifier une fausse carte par le terminal. Dans ce cas la dimension du tableau peut être plus faible que dans l'exemple précédent, par exemple on peut prévoir un tableau de cent lignes avec un seuil de dix questions. Dans ce cas on prévoira de préférence une fréquence de remplacement du tableau, y compris de son indicatif, assez élevée.

Pour éviter d'atteindre le seuil critique provoquant un blocage des circuits de l'objet portatif, un fraudeur avisé pourrait créer un nouveau tableau en mélangeant plusieurs tableaux comportant des indicatifs différents en prenant dans chacun d'eux à chaque fois un nombre de lignes inférieur au seuil de façon à obtenir toutes les réponses aux questions du nouveau tableau ainsi constitué. Selon une variante de cet aspect de l'invention qui est illustrée par la figure 4, on prévoit de mémoriser l'indicatif du tableau non seulement dans chacune des questions, mais également dans une mémoire 15 du tableau, et avant la transmission d'une question à l'objet portatif on s'assure que l'indicatif de tableau qu'elle contient correspond effectivement au tableau considéré en comparant la partie Ix de la question à l'indicatif It du tableau au moyen d'un comparateur 16. Si une anomalie est constatée, le terminal est mis hors service et une alarme est éventuellement déclenchée auprès de l'organisme autorisé afin qu'une vérification soit effectuée.

Pour éviter une saturation de la mémoire de l'objet portatif, on prévoit de préférence de remettre à zéro les compteurs des objets portatifs lorsqu'un tableau est modifié. Pour cela on effectue par exemple une modification des tableaux des différents terminaux à des dates fixes et on mémorise dans l'objet portatif la date de remise à zéro des compteurs. Ainsi chaque fois qu'un objet portatif est connecté à un terminal il est possible de vérifier si la date de la dernière remise à zéro des compteurs est antérieure à la dernière modification du tableau et dans ce cas de remettre à zéro les compteurs de l'objet portatif en éliminant les indicatifs correspondants.

Selon une autre variante de réalisation, on pourra prévoir des terminaux équipés de plusieurs tableaux différents afin de permettre une authentification d'objets portatifs contenant des codes secrets différents, chaque tableau étant associé à un code secret. Chaque objet portatif contiendra alors un moyen d'identification du tableau devant servir à son authentification afin que le procédé décrit puisse se dérouler correctement. Lors de la connexion, l'objet portatif transmettra au terminal ce moyen d'identification du tableau associé à son code secret, les opérations suivantes d'authentification étant alors conformes au procédé selon l'invention précédemment décrit.

Bien que l'aspect de l'invention relatif à l'utilisation d'un indicatif de tableau ait été décrit en relation avec la version de base du procédé selon l'invention, on peut également prévoir cet aspect en relation avec la version sophistiquée à plusieurs tableaux.

Bien entendu l'invention n'est pas limitée aux différentes versions décrites et on peut y apporter des variantes de réalisation sans sortir du cadre de l'invention tel que défini par les revendications.

## Revendications

1. Procédé d'authentification par un terminal hors ligne (1) d'un objet portatif (2) contenant un code d'authentification secret (K) et un circuit de traitement (4) apte à délivrer une valeur secondaire (Rx) qui est fonction d'une valeur primaire (Qi) transmise par le terminal et dudit code d'authentification secret (K), caractérisé en ce qu'on met en place dans le terminal un tableau d'authentification (5) associant une série de valeurs primaires (Qi) et une série de valeurs de contrôle (Ui), chaque valeur de contrôle étant la transformée par une fonction à sens unique de la valeur secondaire (Ri) calculée par le circuit de traitement d'un objet portatif authentique à partir d'une valeur primaire donnée, et en ce que lors d'une connexion d'un objet portatif avec le terminal, on transmet à l'objet portatif l'une des valeurs primaires (Qi) du tableau, on fait calculer par l'objet portatif une valeur secondaire (Rx), on applique, dans le terminal, la fonction à sens unique à la valeur secondaire (Rx) reçue de l'objet portatif et on compare le résultat obtenu à la valeur de contrôle correspondante (Ui) du tableau.

2. Procédé selon la revendication 1, caractérisé en ce que le tableau d'authentification (5) comporte en outre pour chaque valeur primaire (Qi) une signature (Si) qui est la transformée par une fonction asymétrique d'une combinaison de la valeur primaire (Qi) et de la valeur de contrôle (Ui) correspondante, et en ce que lors d'une connexion de l'objet portatif avec le terminal, on effectue d'une part la combinaison de la valeur primaire sélectionnée et de la valeur de contrôle correspondante du tableau, d'autre part on applique à la signature correspondante du tableau une fonction inverse de la fonction asymétrique, et on compare les résultats obtenus.

3. Procédé selon la revendication 1 ou la revendication 2, caractérisé en ce qu'on élimine une valeur primaire du tableau après que celle-ci a été transmise une fois à un objet portatif.

4. Procédé selon la revendication 1 ou la revendication 2, caractérisé en ce qu'on inclut à chaque valeur primaire du tableau un indicatif (It) de celui-ci, on mémorise dans l'objet portatif l'indicatif de chaque tableau dont une valeur primaire lui a été transmise lors de sa connexion à un terminal, on associe à chaque indicatif mémorisé un compteur (12) et on bloque la valeur secondaire correspondant à une nouvelle valeur primaire ayant le même indicatif lorsque le nombre de valeurs primaires transmises a atteint un seuil mémorisé.

5. Procédé selon la revendication 4, caractérisé en ce que, lorsque le tableau d'un terminal est modifié, les compteurs correspondants des objets portatifs sont remis à zéro.

6. Procédé selon la revendication 4 ou la revendication 5, caractérisé en ce qu'avant la transmission d'une valeur primaire à l'objet portatif on s'assure que l'indicatif de tableau qu'elle contient correspond effectivement au tableau considéré.

7. Procédé selon la revendication 1, caractérisé en ce que :

- plusieurs codes d'authentification secrets (K) sont contenus dans plusieurs objets portables respectifs ;

- le terminal détient une pluralité de tableaux d'authentification (5), chaque tableau regroupant les valeurs de contrôle (Ui) qui sont fonction d'un même code d'authentification secret (K) ; et

- l'objet portatif transmet au terminal, lors d'une connexion, des moyens d'identification du tableau associé à son code d'authentification (K), dont une valeur primaire est alors transmise à l'objet portatif.

8. Objet portatif apte à mettre en oeuvre le procédé selon la revendication 1, comportant une mémoire (3) non accessible en lecture depuis l'extérieur et contenant un code d'authentification secret (K), et un circuit de traitement (4), caractérisé en ce que celui-ci utilise un algorithme de chiffrement symétrique pour délivrer une valeur secondaire (Rx) qui est fonction du code secret (K) et d'une valeur primaire (Qi) transmise à l'objet par le terminal dans lequel l'objet est introduit, et en ce que cet objet comporte une mémoire (15) apte à retenir l'indicatif (It) d'un terminal, associée à un compteur (12) incrémenté à chaque connexion au terminal, et un dispositif bloquant le fonctionnement de l'objet portatif lorsque la valeur du compteur dépasse un seuil prédéterminé.

9. Terminal apte à mettre en oeuvre le procédé selon la revendication 1, caractérisé en ce qu'il comporte une série de valeurs primaires (Qi) et une série de valeur de contrôle (Ui), un dispositif (6) apte à appliquer, à une valeur secondaire reçue lors d'une procédure d'authentification d'un objet portatif connecté au terminal, une fonction à sens unique (f) et un comparateur (7) du résultat obtenu et de la valeur de contrôle correspondante du tableau.

10. Terminal selon la revendication 9, caractérisé en ce qu'il comporte un dispositif (9, 10) apte à vérifier, lors d'une authentification d'un objet portatif, que le couple valeur primaire et valeur de contrôle n'a pas été modifié.

**Patentansprüche**

1. Verfahren zur Echtheitsprüfung eines tragbaren Gegenstands (2) mittels eines Offline-Terminals, wobei der Gegenstand einen geheimen Echtheitsprüfungscode (K) und eine Verarbeitungsschaltung (4) enthält, die geeignet ist, einen sekundären Wert (Rx) auszugeben, der von einem vom Terminal übertragenen primären Wert (Qi) und von dem geheimen Echtheitsprüfungscode (K) abhängt, dadurch gekennzeichnet, daß in dem Terminal eine Echtheitsprüfungstabelle (5) vorgesehen ist, die eine Zuordnung zwischen einer Reihe von primären Werten (Qi) und einer Reihe von Steuerwerten (Ui) schafft, wobei jeder Steuerwert die Transformierte ist, die durch eine einsinnige Funktion aus dem sekundären Wert (Ri) erhalten wird, der von der Verarbeitungsschaltung eines echten tragbaren Gegenstands anhand eines gegebenen primären Werts berechnet wird, und daß beim Anschluß eines tragbaren Gegenstandes an das Terminal an den tragbaren Gegenstand einer der primären Werte (Qi) der Tabelle übertragen wird, vom tragbaren Gegenstand ein sekundärer Wert (Rx) berechnet wird, im Terminal die einsinnige Funktion auf den vom tragbaren Gegenstand empfangenen sekundären Wert (Rx) angewendet wird und das erhaltene Ergebnis mit dem entsprechenden Steuerwert (Ui) der Tabelle verglichen wird.

2. Verfahren nach Anspruch 1, dadurch gekennzeichnet, daß die Echtheitsprüfungstabelle (5) außerdem für jeden primären Wert (Qi) eine Signatur (Si) enthält, die die Transformierte ist, die durch eine asymmetrische Funktion aus einer Kombination des primären Werts (Qi) und des entsprechenden Steuerwerts (Ui) erhalten wird, und daß beim Anschluß des tragbaren Gegenstands an das Terminal einerseits die Kombination des gewählten primären Werts und des entsprechenden Steuerwerts der Tabelle gebildet wird und daß andererseits auf die entsprechende Signatur der Tabelle 1 eine inverse Funktion der asymmetrischen Funktion angewendet wird und daß die erhaltenen Ergebnisse verglichen werden.

3. Verfahren nach Anspruch 1 oder Anspruch 2, dadurch gekennzeichnet, daß ein primärer Wert der Tabelle entfernt wird, nachdem dieser einmal an einen tragbaren Gegenstand übertragen worden ist.

4. Verfahren nach Anspruch 1 oder Anspruch 2, dadurch gekennzeichnet, daß in jeden primären Wert der Tabelle eine Kennung (It) derselben aufgenommen wird, daß im tragbaren Gegenstand die Kennung jeder Tabelle gespeichert wird, von der an ihn bei seinem Anschluß an ein Terminal ein primärer Wert übertragen worden ist, daß jede gespeicherte Kennung einem Zähler (12) zugeordnet wird und daß der sekundäre Wert, der einem neuen, die gleiche Kennung besitzenden primären Wert entspricht, gesperrt wird, wenn die Anzahl der übertragenen primären Werte einen gespeicherten Schwellenwert erreicht hat.

5. Verfahren nach Anspruch 4, dadurch gekennzeichnet, daß bei einer Abwandlung der Tabelle eines Terminals die entsprechenden Zähler der tragbaren Gegenstände auf null zurückgesetzt werden.

**6.** Verfahren nach Anspruch 4 oder Anspruch 5, dadurch gekennzeichnet, daß vor der Übertragung eines primären Werts an den tragbaren Gegenstand sichergestellt wird, daß die Kennung der Tabelle, die er enthält, effektiv der betrachteten Tabelle entspricht.

**7.** Verfahren nach Anspruch 1, dadurch gekennzeichnet, daß:

- mehrere geheime Echtheitsprüfungscodes (K) in mehreren jeweiligen tragbaren Gegenständen enthalten sind;

- das Terminal mehrere Echtheitsprüfungstabellen (5) hält, wovon jede die Steuerwerte (Ui), die vom selben geheimen Echtheitsprüfungscode (K) abhängen, zu Gruppen zusammenfaßt; und

- der tragbare Gegenstand an das Terminal bei einem Anschließen Mittel zur Identifizierung der Tabelle, die seinem Echtheitsprüfungscode (K) zugeordnet ist, überträgt, wobei dann ein primärer Wert der Tabelle an den tragbaren Gegenstand übertragen wird.

**8.** Tragbarer Gegenstand, der geeignet ist, das Verfahren nach Anspruch 1 auszuführen, mit einem Speicher (3), auf den nicht von außerhalb zum Lesen zugegriffen werden kann und der einen geheimen Echtheitsprüfungscode (K) und eine Verarbeitungsschaltung (4) enthält, dadurch gekennzeichnet, daß er einen symmetrischen Verschlüsselungsalgorithmus verwendet, um einen sekundären Wert (Rx) auszugeben, der vom geheimen Code (K) und von einem primären Wert (Qi) abhängt, der von dem Terminal, in das der Gegenstand eingeführt worden ist, an den Gegenstand übertragen wird, und daß dieser Gegenstand einen Speicher (15), der geeignet ist, die Kennung (It) eines Terminals zu halten, der ein Zähler (12) zugeordnet ist, der bei jedem Anschluß an das Terminal inkrementiert wird, sowie eine Vorrichtung enthält, die die Funktion des tragbaren Gegenstands sperrt, wenn der Wert des Zählers einen vorgegebenen Schwellenwert übersteigt.

**9.** Terminal, das geeignet ist, das Verfahren nach Anspruch 1 auszuführen, dadurch gekennzeichnet, daß es eine Reihe von primären Werten (Qi) und eine Reihe von Steuerwerten (Ui), eine Vorrichtung (6), die geeignet ist, auf einen sekundären Wert, der während einer Echtheitsprüfungsprozedur eines an das Terminal angeschlossenen tragbaren Gegenstands empfangen wird, eine einsinnige Funktion (f) anzuwenden, sowie einen Komparator (7) zum Vergleichen des erhaltenen Ergebnisses mit dem entsprechenden Steuerwert der Tabelle enthält.

**10.** Terminal nach Anspruch 9, dadurch gekennzeichnet, daß es eine Vorrichtung (9, 10) enthält, die geeignet ist, bei einer Echtheitsprüfung eines tragbaren Gegenstands zu überprüfen, daß das Paar aus primärem Wert und Steuerwert nicht verändert worden ist.

**Claims**

**1.** Method of authentication by an offline terminal (1) of a portable object (2) containing a secret authentication code (K) and a processing circuit (4) capable of delivering a secondary value (Rx), which is a function of a primary value (Qi) transmitted by the terminal and of said secret authentication code (K), characterised in that, within the terminal, there is placed an authentication table (5) associating a series of primary values (Qi) and a series of control values (Ui), each control value being the transform, by a one-way function, of the secondary value (Ri) calculated by the processing circuit of an authentic portable object, based on a given primary value, and in that, during a connection of a portable object to the terminal, one of the primary values (Qi) of the table is transmitted to the portable object, the portable object is caused to calculate a secondary value (Rx), the one-way function is applied in the terminal to the secondary value (Rx) received from the portable object and the result obtained is compared with the corresponding control value (Ui) of the table.

**2.** Method according to Claim 1, characterised in that the authentication table (5) further comprises, for each primary value (Qi), a signature (Si), which is the transform, by an asymmetric function, of a combination of the primary value (Qi) and of the corresponding control value (Ui), and in that, during a connection of the portable object to the terminal, on the one hand the combination of the selected primary value and of the corresponding control value of the table is effected, on the other hand an inverse function of the asymmetric function is applied to the corresponding signature of the table, and the results obtained are compared.

**3.** Method according to Claim 1 or Claim 2, characterised in that a primary value is eliminated from the table after said value has been transmitted once to a portable object.

**4.** Method according to Claim 1 or Claim 2, characterised in that at each primary value of the table there is included an identifier (It) thereof, the portable object has stored in it the identifier of each table for which a primary value has been transmitted to it during its connection to a terminal, a counter (12) is associated with each identifier stored, and the secondary value corresponding to a new primary value having the same identifier is blocked when the number of primary values transmitted has reached a stored threshold.

5. Method according to Claim 4, characterised in that, when the table of a terminal is modified, the corresponding counters of the portable objects are reset to zero.

6. Method according to Claim 4 or Claim 5, characterised in that, before the transmission of a primary value to the portable object, it is ensured that the table identifier that it contains actually correspond to the table in question.

7. Method according to Claim 1, characterised in that:

   - several secret authentication codes (K) are contained in several respective portable objects;

   - the terminal holds a plurality of authentication tables (5), each table containing the control values (Ui) that are a function of the same secret authentication code (K); and

   - the portable object transmits to the terminal, during a connection, means of identifying the table associated with its authentication code (K), a primary value of which is then transmitted to the portable object.

8. Portable object capable of implementing the method according to Claim 1, comprising a memory (3) not accessible in read mode from outside and containing a secret authentication code (K), and a processing circuit (4), characterised in that said circuit uses a symmetrical encryption algorithm in order to deliver a secondary value (Rx), which is a function of the secret code (K) and of a primary value (Qi) transmitted to the object by the terminal into which the object is introduced, and in that this object comprises a memory (15) capable of holding the identifier (It) of a terminal, associated with a counter (12) incremented on each connection to the terminal, and a device blocking the functioning of the portable object when the value of the counter exceeds a predetermined threshold.

9. Terminal capable of implementing the method according to Claim 1, characterised in that it comprises a series of primary values (Qi) and a series of control value (Ut), a device (6) capable of applying, to a secondary value received during a procedure for authenticating a portable object connected to the terminal, a one-way function (f) and a comparator (7) of the result obtained and of the corresponding control value of the table.

10. Terminal according to Claim 9, characterised in that it comprises a device (9, 10) capable of verifying, when a portable object is authenticated, that the pair: primary value and control value has not been modified.

FIG.1

FIG.2

FIG.3

FIG.4